(19) **Europäisches Patentamt**

**European Patent Office**

**Office européen des brevets**

(11) **EP 1 202 172 A1**

(12) **EUROPEAN PATENT APPLICATION**

(43) Date of publication:
**02.05.2002 Bulletin 2002/18**

(51) Int Cl.$^7$: **G06F 9/46**

(21) Application number: **00870257.3**

(22) Date of filing: **31.10.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **UNIVERSITEIT GENT**
**9000 Gent (BE)**

(72) Inventor: **Christiaens, Mark**
**B-9880 Aalter (BE)**

(74) Representative: **Bird, William Edward et al**
**Bird Goen & Co.,**
**Vilvoordsebaan 92**
**3020 Winksele (BE)**

(54) **Topological, on-the-fly classification of objects into a global set and local sets**

(57) The present invention relates to concurrently executing program threads in computer systems, an more particularly to detecting data races.

A computer implemented method for detecting data races in the execution of multi-threaded, strictly object oriented programs is provided, whereby objects on a heap are classified in a set of global objects, containing objects that can be reached by more than one thread, and sets of local objects, containing objects that can only be reached by one thread. Only the set of global objects is observed for determining occurrence of data races.

Fig. 5

**EP 1 202 172 A1**

## Description

## Technical field of the invention

The present invention relates to methods and apparatus for concurrently executing program threads in computer systems, and more particularly to the classification of objects into a global set and local sets, and the application thereof for detecting inconsistent dynamic concurrency state transitions, such as data races.

## Background of the invention

In complex computer systems, multiple executions paths, or 'threads' can perform several tasks simultaneously (multi-threading). Each thread may then perform a different job, such as waiting for events to happen, or performing a time-consuming job that the program does not need to complete before going on. Multi-threading is used more and more, for example in FTP servers, background spelling checkers, parallel scientific calculations. Performing several tasks simultaneously can improve the execution speed by executing the threads on separate processors or it can improve the response time to events by suspending less time critical threads and allowing a more critical thread to react quickly to the event. In a multiprocessor system, execution of threads can progress at different speeds depending on, for example, different load conditions of the different processors.

This often results in two or more threads simultaneously modifying a shared resource in a non-deterministic way; a situation often known as a data race. For example, a thread may read data from a certain address that can simultaneously be written to by one or more other threads. The actual data read depends on the order of reading and writing by the individual threads. The non-determinism resulting from such data races can cause the program to produce erroneous results.

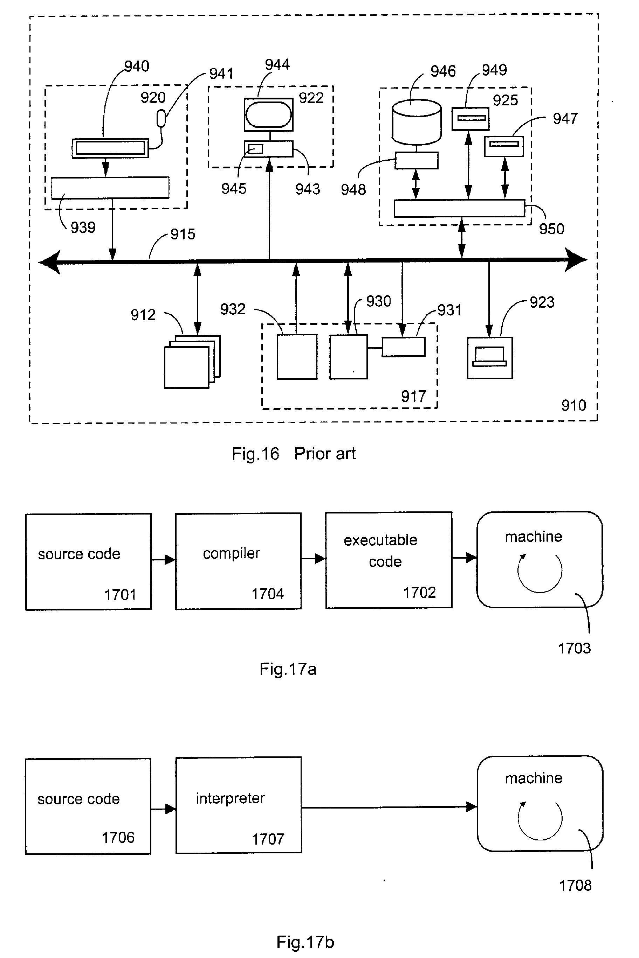

In Fig. 15, a simple example of a data race is shown. On the left, a thread $T_2$ accesses a common object A, and writes the value 5 to it. This is followed by thread $T_1$ accessing the same object A and writing the value 6 to it. The result of the operation is that object A contains the value 6. On the right, thread $T_1$ executes faster which results in the same events happening, but in reverse order: first thread $T_1$ accesses the object A and writes the value 6 to it, and then thread $T_2$ accesses the object A and writes the value 5 to it. This results in the object A containing the value 5. If it is known where data races are likely to occur, synchronisation can be added by the programmer into the code to force a specific order.

It is a problem to detect data race errors in multi-threading systems, because of two reasons. First of all, they are non-deterministic. Even if they are observed in one run, during a next run they may not occur again. This makes tracing of errors very difficult or impossible. Secondly, they are non-local. One thread may be performing a spelling check and another may be editing the text being checked. These are two almost totally unrelated sections of code that, if not well synchronised, may cause problems.

To avoid data races, a programmer can force fragments of code running on different threads to execute in a certain order by adding extra synchronisation between these threads. Hence, there is a need to know which parts of the code could be involved in a data race so that the appropriate action can be taken.

Known techniques for checking for data races are:

- Static checking for data races on the source code, such as described by Netzer, R.H.B., "Race condition detection for debugging shared-memory parallel programs" (Ph.D. thesis, University of Wisconsin-Madison), and in US-5,822,588. Problems with this technique are that the interaction of threads varies dynamically while the threads are executing. Finding all data races through static analysis is generally an NP complete problem.
- Post-mortem analysis of the state of a system in which an erroneous result was determined. An advantage of this technique is that only one execution of the program is being analysed. Therefore, only data races that occurred during a specific interaction of the threads are considered and the search space for data races is reduced. A problem with this technique is that the occurrence of data races is non-deterministic. This implies that it may take a very long time before a state of a system can be reached in which a data race produces an erroneous result. Furthermore, the state of such a system is usually recorded at a point in the execution of the system long after the actual data race occurred. It is therefore very hard to backtrack to the original data race.
- Dynamic checking for data races during a particular execution (on-the-fly analysis), as described in US-6,009,269. The same advantages as post-mortem analysis apply. An extra advantage is that data races are detected as they occur. So the problems of backtracking from a certain point in the execution back to the data race can be reduced. A problem with this known approach is that every operation on data has to be observed. This results in a very large execution time overhead making dynamic detection of data races very time consuming and very intrusive compared to the original execution.

AssureJ is a tool capable to detect, among other things, data races in Java programs. A short-coming of AssureJ is that, when two events race (so their vector clocks are parallel) but their threads do not actually overlap in time, no race is detected.

Garbage collectors or better "incremental garbage collectors" are used for reclamation of storage or memory space during execution of a computer program. Popular programming languages such as C or C++ allow programmers to explicitly allocate and deallocate portions of memory. This requires careful programming. One way of solving this problem is to use a garbage collector. One problem with incremental garbage collectors with a programming language such as C is that the program can alter pointer references "behind the back of the garbage collector". This means that between activations (hence, the word "incremental") of the garbage collector, the references to objects has changed this can result in incorrect deallocation of memory. Various techniques are known to solve this problem. For example, US 6,055,612 describes a method of increasing the security of the memory decommit operation. However, the garbage collector still absorbs a large amount of processing time. Languages such as Java™ prohibit the use of explicit deallocation by programs for which the garbage collector is collecting garbage. The problem with this solution is that legacy programs can not be upgraded. Also, a program may only require a small amount of memory to be freed but the garbage collection process takes a long time and frees more memory than currently required. Hence, there is a need for a garbage collector which has increased flexibility and speed without sacrificing the security of memory deallocation.

It is an object of the present invention to provide a method and apparatus for mechanisms for more efficient dynamic tracking of objects in multi-threaded computer programs.

It is a further object of the present invention to provide a method and apparatus or mechanisms for detecting inconsistent dynamic concurrency state transitions in the execution of multi-threaded programs, which reduces the time overhead involved.

It is a further object of the present invention to provide improved compiler, interpreter and garbage collector mechanisms .

## Summary of the invention

The above objects are solved by a method for classifying objects into a set of global objects and sets of local objects, implemented in a computer system, whereby the classifying is done dynamically by observing modifications to references to objects by operations performed in the computer system.

Preferably, according to a method of the present invention, each object is provided with an instrumentation data structure to enable observation of modifications to references to objects. According to a preferred embodiment, this instrumentation data structure comprises at least a thread identification tag for identifying whether an object can be reached by only one thread or by more than one thread.

In one embodiment of the present invention the above method is implemented as a computer implemented method for detecting inconsistent dynamic concurrency state transitions, especially data races in execution of multi-threaded programs which are amenable to object reachability analysis. For example, strictly object oriented programs are amenable to object reachability analysis but the present invention is not limited thereto. With strictly object oriented is meant that the programming language has a strict notion of object, i.e. a reference or a handle is the only way to reach an object, pointers to an object are not used. An example is a program written in the Java™ language. However, the present invention may be applied to programs written in other languages which use pointers such as the C language for example.

According to a method of the present invention, objects currently instantiated are classified in a set of global objects, for short the global set, containing objects that can be reached by multiple threads, and sets of local objects, for short the local sets, containing objects that can only be reached by one thread. The global set and the local sets are subsets of the total set of objects created and updated during the program's execution. When an object is local, i. e. member of a local set of a thread, it can never be involved in a data race. Only the global set is observed for determining occurrence of inconsistent concurrency transitions such as data races, and these occurrences are reported.

Each local set is associated with exactly one thread. When an object is created by a thread, this object is initially member of the local set associated with this thread. When an operation is performed that inserts a reference to a local object into a global object, the local object is removed from its local set and stored in the global set, thereby becoming a global object.

As a multi-threaded program executes, references to objects may be dropped. As such, a global object that was once reachable by multiple threads can once again become reachable by one thread only. To detect this during execution of the program, all objects in the global set are analysed and possibly reassigned to a local set if the thread associated with this local set has exclusive access to the object. This reassignment can be performed at the programmer's discretion or automatically. By the combination of not checking operations on local objects for data races and reassigning objects to local sets, the execution time overhead of data race detection is reduced.

The frequency of the above mentioned reassignment is subject to a trade-off. If the time between reassignments is increased, the number of objects in the global set that are in fact only reachable by one thread, increases accordingly. Therefore, the time to observe and analyse these global objects (as well as the memeory required to store the results of the analysis) also increases. On the other hand, if the time between reassignments is made very short, the number of objects that are unnecessarily kept in the global set is small and little time is lost while observing and analysing the global objects. But this reassignment procedure absorbs processing time thus slowing down the operation overall. An optimum can be obtained between the number or frequency of reassignments and time for analysis.

In order to make race detection possible, each object created during execution of the multi-threaded program is provided with a special data structure. This data structure logs specific information about the thread.

In a second aspect of the invention, a data structure, called an accordion clock, is maintained to determine whether two events can execute in parallel. An accordion clock is a refinement of a vector clock that takes into account the fact that threads are created and destroyed dynamically and adapts the dimension of the accordion clock in response thereto.

The method of the present invention can be used as a debugging tool, and may be used to indicate potential data race problems in a program. Based on a report of potential data races a programmer can then force fragments of code running on different threads to execute in a certain order by adding extra synchronisation between these threads. In other embodiments of the present invention the method is implemented in a compiler, in an interpreter and in a garbage collector.

The present invention also includes a computer system comprising:

> means for observing modifications to references to objects by operations performed in the computer system when executing multi-threaded programs;
> means for dynamically classifying the objects into a set of global objects, containing objects that can be reached by more than one thread, and a set of local objects, containing objects that can only be reached by one thread based on the output of the observing means.

The present invention also includes a computer system for detecting inconsistent dynamic concurrency state transitions in the execution of multi-threaded programs amenable to object reachability analysis, comprising:

> means for executing multiple threads on the computer system;
> means for at least periodically during execution of the threads classifying instantiated objects into a set of global objects (503; 1508), containing objects that can be reached by more than one thread, and a set of local objects (504; 1505, 1506, 1507), containing objects that can only be reached by one thread, and
> means for recording in a memory concurrency state transition information of global objects.

The present invention also includes a computer system for determining the order of events in the presence of a dynamically changing number of threads of a computer program executable on the computer system having a memory, comprising:

> a clock data structure (601) maintained in memory, the dimension of the clock data structure (601) being determined dynamically dependent upon the number of threads created and destroyed during execution of the program; and
> means for determining from the clock data structure (601) the occurrence of two events in parallel during execution of the threads.

The present invention also includes a computer language compiler mechanism for converting a multi-threaded source program described by a program language into a computer executable machine language for a computer system, comprising:

> means for receiving the source program;
> means for analysing the source program to produce object information;
> means for classifying the object information into a set of global objects, containing objects that can be reached by more than one thread, and a set of local objects, containing objects that can only be reached by one thread, whereby the classifying is done dynamically by observing modifications to references to objects required during the execution of the source program.

The present invention also includes a computer language compiler mechanism for converting a multi-threaded source program described by a program language into a computer executable machine language for a computer system having a memory, comprising:

means for receiving the source program;
means for determining the order of events in the presence of a dynamically changing number of threads of the machine language program when executed on a computer, the order determining means comprising:

a clock data structure (601) to be maintained in the memory, the dimension of the clock data structure (601) being determined dynamically dependent upon the number of threads which would be created and destroyed during execution of the machine language program on the computer; and
means for determining, from the clock data structure (601), the occurrence of two events which would occur in parallel during execution of the threads on the computer.

The form of the above compiler is not considered as a limitation on the present invention. For example, any of the above compiler mechanisms may be implemented as conventional compilers, just-in-time or on-the-fly compilers, hybrid compilers. They may also be implemented as add-on programs to existing compilers.

The present invention also includes a garbage collector mechanism for use in a computer system running a multi-threaded program, comprising:

means for observing modifications to references to objects by operations performed in the computer system when executing a multi-threaded program; means for dynamically classifying the objects into a set of global objects, containing objects that can be reached by more than one thread, and a set of local objects, containing objects that can only be reached by one thread based on the output of the observing means; the garbage collector mechanism being adapted to selectably carry out garbage collection only on the set of local objects.

The above garbage collector mechanism may be implemented as an integral part of a garbage collector or may be implemented as an add-on feature to an existing garbage collector. Typically, the garbage collector will be implemented as an incremental garbage collector.

The present invention also includes an interpreter mechanism for receiving a multi-threaded source program written in a programming language and for outputting machine language instructions to a processing unit, comprising:

means for observing modifications to references to objects by operations performed when executing the multi-threaded program on the processing unit; means for dynamically classifying the objects into a set of global objects, containing objects that can be reached by more than one thread, and a set of local objects, containing objects that can only be reached by one thread based on the output of the observing means.

The present invention also includes an interpreter mechanism for receiving a multi-threaded source program written in a programming language and for outputting machine language instructions to a processing unit, comprising:

means for at least periodically during execution of the multi-threaded source program classifying instantiated objects into a set of global objects (503; 1508), containing objects that can be reached by more than one thread, and a set of local objects (504; 1505, 1506, 1507), containing objects that can only be reached by one thread, and means for recording in a memory concurrency state transition information of global objects.

The present invention also includes an interpreter mechanism for receiving a multi-threaded source program written in a programming language and for outputting machine language instructions to a processing unit, comprising:

a clock data structure (601) maintained in memory, the dimension of the clock data structure (601) being determined dynamically dependent upon the number of threads created and destroyed during execution of the source program; and
means for determining from the clock data structure (601) the occurrence of two events in parallel during execution of the threads.

Any of the above interpreter mechanisms may be implemented as a virtual machine. The interpreter mechanisms according to the present invention may be included as an integral part of an interpreter or may be included as an add-on to an existing interpreter.

The present invention also includes a computer program product comprising:

instruction means for observing modifications to references to objects by operations performed in the computer system when executing multi-threaded programs; and
instruction means for dynamically classifying the objects into a set of global objects, containing objects that can be reached by more than one thread, and a set of local objects, containing objects that can only be reached by one thread based on the output of the observing means.

The present invention also includes a computer program product for detecting inconsistent dynamic concurrency state transitions in the execution of multi-threaded programs amenable to object reachability analysis, comprising:

instruction means for executing multiple threads on a computer system;
instruction means for at least periodically during execution of the threads classifying instantiated objects into a set of global objects (503; 1508), containing objects that can be reached by more than one thread, and a set of local objects (504; 1505, 1506, 1507), containing objects that can only be reached by one thread, and
instruction means for recording in a memory concurrency state transition information of global objects.

The present invention also includes a computer program product for determining the order of events in the presence of a dynamically changing number of threads of a computer program executable on the computer system having a memory, comprising:

instruction means for maintaining a clock data structure (601) in memory, the dimension of the clock data structure (601) being determined dynamically dependent upon the number of threads created and destroyed during execution of the program; and
instruction means for determining from the clock data structure (601) the occurrence of two events in parallel during execution of the threads.

Any of the above computer programming products may be stored on suitable data carriers such as hard discs, diskettes, CD-ROM's or any other suitable media. The computer program product may also be downloaded via a suitable telecommunications network such as a Local Area Network; a Wide Area Network, the Internet, a telephone network. The present invention includes temporarily storing a part or whole of the computer program product at intermediate nodes of a telecommunications network, such as a data carrier network or a public telephone network.

Other features and advantages of the present invention will become apparent from the following detailed description, taken in conjunction with the accompanying drawings, which illustrate, by way of example, the principles of the invention.

The detailed description is given for the sake of example only, without limiting the scope of the invention. The reference figures quoted below refer to the attached drawings.

**Brief description of the drawings**

Fig. 1 is a schematic overview of a method according to an embodiment of the present invention for detecting data races of multiple threads executing source programs.
Fig. 2 is a schematic representation of a heap constructed during an execution of class files.
Fig. 3 is a schematic representation of an object.
Fig. 4 is a schematic representation of extra instrumentation of every object.
Fig. 5 is a schematic representation of a division of a heap in global and local objects.
Fig. 6 is a schematic representation of an accordion clock in accordance with an embodiment of the present invention.
Fig. 7 is a diagrammatic illustration of a sequential order of events in one thread.
Fig. 8 is a diagrammatic illustration of synchronisations using the Thread class.
Fig. 9 is a diagrammatic illustration of synchronisations through a locked object.
Fig. 10 is a diagrammatic illustration of synchronisations through signals.
Fig. 11 is a schematic representation of a thread information structure.
Fig. 12 is a schematic representation of a lock information structure.
Fig. 13 is a schematic overview of a subdivision of a heap into a plurality of local sets and a global set.
Fig. 14 is a schematic overview of the instrumentation of an object to perform full data race detection according to the present invention.
Fig. 15 illustrates an example of a data race.
Fig. 16 is a block diagram of a typical computer system in which the present invention may be embodied.
Fig. 17 is a schematic representation of a comparison of the working of a compiler (Fig. 17a) and an interpreter (Fig. 17b)

**Description of the illustrative embodiments**

The present invention will be described with respect to particular embodiments, for example written in the Java™ programming language, and with reference to certain drawings but the invention is not limited thereto but only by the claims. Other programming languages may be used with the present invention, e.g. SmallTalk™, or any other strict object oriented programming language where a reference is the only way to reach an object. In addition, the technique can be applied to programs written in non-strictly object oriented languages as long as these can be analysed to established dynamically which threads can access parts of the data in the program and which threads cannot do this. For example, the present invention may also be applied to programs written in a language such as C or C++.

The preferred embodiments of the present invention are implemented on a computer system. In particular, the preferred embodiments of the method of the present invention comprise steps performed by a computer system executing a software program.

Fig. 16 is a simplified block diagram of a computer system 910 which can be used for the computer system in which the method of the present invention may be embodied. The computer system configuration illustrated at this level is general purpose, and as such, Fig. 16 is labeled "Prior Art." A computer system such as system 910, suitably programmed to embody the present invention, however, is not prior art. The specific embodiments of the invention are embodied in a general-purpose computer system such as shown in Fig. 16, and the remaining description will generally assume this environment.

In accordance with known practice, a computer system 910 includes at least one processor 912 that may communicate with a number of peripheral devices via a bus subsystem 915. These peripheral devices typically include a memory subsystem 917, a user input facility 920, a display subsystem 922, output devices such as a printer 923, and a file storage system 925. Not all of these peripheral devices need to be included for all embodiments of the invention.

The term "bus subsystem" is used generically so as to include any mechanism for letting the various components of the system communicate with each other as intended. The different components of the computer system 910 need not be at the same physical location. Thus, for example, portions of the file storage system could be connected via various local-area or wide-area network media, including telephone lines. Similarly, the input devices and display need not be at the same location as the processor.

Bus subsystem 915 is shown schematically as a single bus, but a typical system has a number of buses such as a local bus and one or more expansion buses (*e.g.*, ADB, SCSI, ISA, EISA, MCA, NuBus, or PCI), as well as serial and parallel ports, Ethernet cards etc. Network connections are usually established through a device such as a network adapter on one of these expansion buses or a modem on a serial port. The computer system may be a desktop system or a portable system or an embedded controller.

Memory subsystem 917 includes a number of memories including a main random access memory ("RAM") 930 and a read only memory ("ROM") 932 in which fixed instructions are stored. In the case of Macintosh-compatible personal computers this would include portions of the operating system; in the case of IBM-compatible personal computers, this would include the BIOS (basic input/output system). In some embodiments, DMA controller 931 may be included. DMA controller 931 enables transfers from or to memory without going through processor 912.

User input facility 920 typically includes a user interface adapter 939 for connecting a keyboard and/or a pointing device 941 to bus subsystem 915. The pointing device 941 may be an indirect pointing device such as a mouse, trackball, touchpad, or graphics tablet, or a direct pointing device such as a touch screen device incorporated into the display.

Display subsystem 922 typically includes a display controller 943 for connecting a display device 944 to the bus subsystem 915. The display device 944 may be a cathode ray tube ("CRT"), a flat-panel device such as a liquid crystal display ("LCD") or a gas plasma-based flat-panel display, or a projection device. The display controller 943 provides control signals to the display device 944 and normally includes a display memory 945 for storing the pixels that appear on the display device 944.

The file storage system 925 provides persistent (non-volatile) storage for program and data files, and includes an I/O adapter 950 for connecting peripheral devices, such as disk and tape drives, to the bus subsystem 915. The peripheral devices typically comprise at least one hard disk drive 946 and at least one floppy disk drive ("diskette") 947. One or more of the hard disk drives 946 may be in the form of a random array of independent disks ("RAID") system, while others may be more conventional disk drives. The hard disk drive 946 may include a cache memory subsystem 948 which includes fast memory to speed up transfers to and from the hard disk drive. There may also be other devices such as a CD-ROM drive 949 and optical drives. Additionally, the system may include hard drives of the type with removable media cartridges. As noted above, one or more of the drives may be located at a remote location, such as in a server on a local area network or at a site on the Internet's World Wide Web.

Those skilled in the art will appreciate that the hardware depicted in Fig. 16 may vary for specific applications. For example, other peripheral devices such as audio adapters may be utilised in addition of the hardware already depicted. Also other peripheral devices may be utilised in place of the hardware depicted.

Java™ is an object oriented language that was designed for writing multi-threaded applications. In Java™ there are only two fundamental data types: primitive types and reference types. Primitive types comprise booleans, integers, floating points, etc. Reference types comprise a reference to an object or contain 'null'. These objects are created dynamically on a type of memory know as a heap. In the usual implementation of Java™ a garbage collector is responsible for removing them when they are no longer referenced. Objects themselves can contain primitive types or references.

A race between two (or more) threads occurs when they modify a member variable of an object in an unpredictable order. Races on variables on a stack in Java™ are impossible since the stack can only be manipulated by the thread to which it belongs.

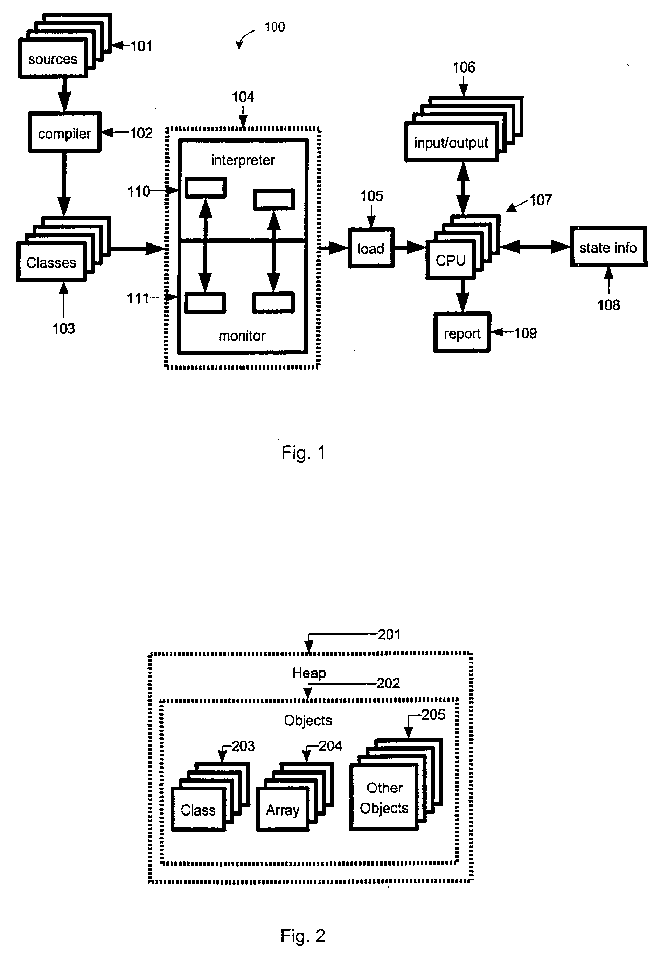

Fig. 1 is a schematic overview of a method 100 that can be used for detecting data races of multiple threads executing, e.g., Java™ source programs 101 as defined by K. Arnold and J. Gosling in "The Java programming language" (Addison-Wesley, 1996).

A programmer or an automatic development tool produces Java™ source code 101. The Java™ source code 101, once processed, is intended to execute concurrently in a computer system (CPU) 107 as described above. Such a computer system 107 may be a workstation, a personal computer or a main frame computer, for example. The computer system 107 comprises a memory and a processor, or multiple memories and processors used in conjunction. In accordance with an embodiment of the present invention, Java™ source code 101 can be compiled by a compiler 102 into class files 103, i.e. a type that defines the implementation of a particular kind of object, containing bytecodes as described by Tim Lindholm and Frank Yellin in "The Java virtual machine specification" (Addison-Wesley, 1997). These class files 103 are then executed in the computer system 107 by means of an augmented interpreter 104 in accordance with an embodiment of the present invention. This augmented interpreter 104 consists of a general bytecode interpreter 110 augmented with a monitor 111. The monitor may be an integral part of the interpreter or may be an add-on to a standard interpreter. The augmented interpreter 104 is loaded into the system 107 by a loader 105. The function of the monitor 111 is to produce a report 109 on concurrency state information concerning concurrently executing threads. The report may contain information on data races occurring while the class files 103 are executing in the system 107. More specifically, when the class files 103 are being executed, four activities of the monitor 111 can be discerned, each of which is described in more detail hereinafter:

1. Every object that is created by the interpreter 110 is instrumented to enable data race detection. This does not mean that every object is monitored.

2. All forms of synchronisation present in the program are analysed in order to find parts of code that are executing in parallel. A logical order between events is established. An event is classified in one of three classes: either ordered before or after another event or is in parallel with this event. Only events that are parallel can be involved in a data race. A special data structure called an 'accordion clock' is described that is used to determine the order of events in the presence of a dynamically varying number of threads.

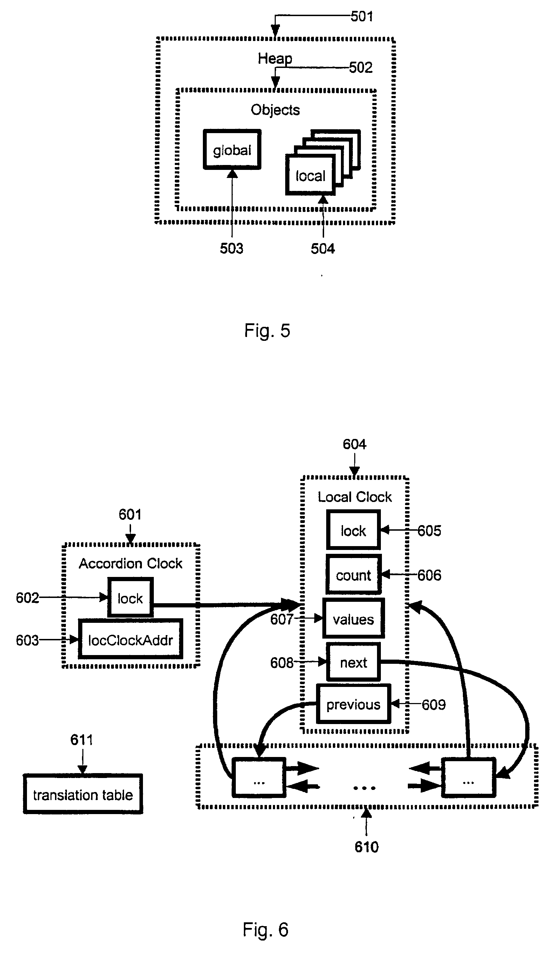

3. A number of sets of objects are maintained (as can be seen in Fig. 5). One set 503 of global objects that are potentially reachable by multiple threads is maintained. Furthermore, for every thread, a set 504 of local objects only reachable by this thread is maintained. In accordance with the present invention only objects from the global set 503 will have to be analysed extensively to find inconsistent concurrency state transitions such as data races.

4. All bytecodes that read or write to a member variable are analysed to find inconsistent concurrency state transitions such as data races. For example, if two bytecodes modify a member variable of an object in the global set and these bytecodes execute in parallel as indicated by their logical order, then a data race is reported.

**Instrumentation of Objects**

While the augmented interpreter 104 executes, a heap 201 of objects 202 is constructed (see Fig. 2). A heap 201 is an area of memory used for dynamic memory allocation where blocks of memory are allocated and freed in an arbitrary order.

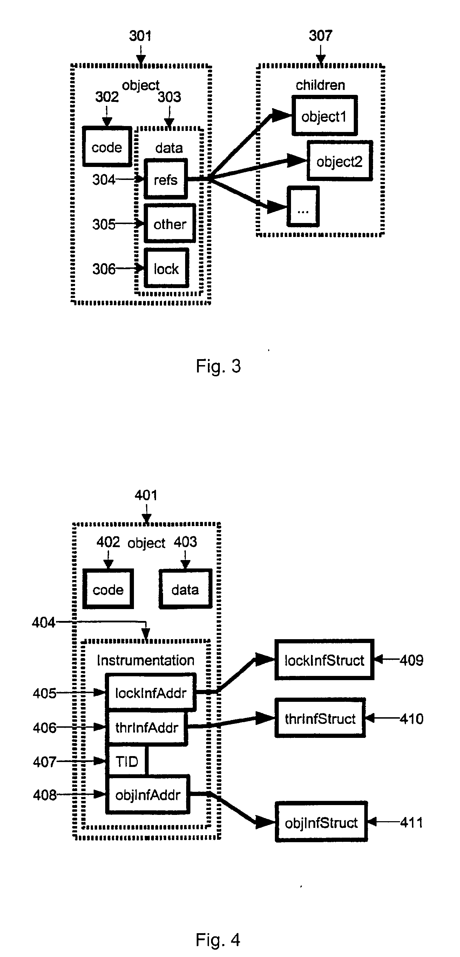

Three types of objects can be discerned: objects of type Class 203, array objects 204 and other objects 205, such as e.g. dates, linked lists, windows, scrollbars, sockets, i.e. all common objects used in a modern program. As represented in Fig. 3, an object 301 comprises code 302, and data 303. Data 303 can be split into:

- references 304 to other objects called the children 307 of the object 301,
- other data 305 that can comprise booleans, shorts, integers, etc,
- a lock 306 that can be taken by a thread to gain exclusive access to some resource.

According to the present invention, for every object 202, 301, 401, extra memory space is allocated for storing an instrumentation data structure 404, as can be seen in Fig. 4. The fields in this data structure 404 are:

- Lock information address 405 (*lockInfAddr*). This is a pointer that is used to attach a larger data structure, the lock information structure 409 (*lockInfStruct*), when the object 401 is being locked for the first time. An object 401 can be locked by a thread. Only one thread at a time can obtain a lock. By holding the lock, the thread can exclude other threads from using the same shared resource. Once the activity for which the lock has been obtained is completed, the lock is released. If the lock is already held by another thread, the thread trying to obtain the lock is put onto a waiting list or in a wait state. If the lock is released, one of the threads waiting on the waiting list is allowed to acquire the lock. The exact layout and the use of the lock information structure 409 is explained hereunder. At object creation, no lock information structure 409 is attached yet to the lock information address 405.

- Thread information address 406 (*thrInfAddr*). This is a pointer where the program deals with an object of type Thread (or a subtype thereof) and not just with a general object. In this case, the thread information address 406 is the address of the thread information structure 410. Thread objects are Java's interface to the actual executing thread. The exact layout and the use of the thread information structure 410 is explained hereunder. At object creation, no thread information structure 410 is attached yet to the thread information address 406.

- Thread identification 407 (*TID*). The thread identification 407 is used to record to which set, as described in Fig. 5, the object 401 belongs. An object 401, 502 may belong to a global set 503 or to a local set 504. Local sets 504 contain objects that can only be reached by one thread. The global set 503 contains objects that may be reachable by more than one thread. If an object 502 is member of the local set 504 of a thread, the thread identification 407 contains the thread identification of this thread. If on the other hand, the object is member of the global set 503, the thread identification 407 contains a value that can never be assigned to a running thread (for example the value -1). The exact function of the thread identification 407 is explained hereunder. At object creation, the thread identification 407 is initialised to the value of the thread that created the object 401.

- Object information address 408 (*objInfAddr*). This is a pointer that is used to attach a larger data structure, the object information structure 411 (*objInfStruct*), in case the program deals with an object 401 which is member of the global set 503. The exact layout and the use of the object information structure 411 is explained hereunder. At object creation, no object information structure 411 is attached yet to the object information address 408 except when an object of type Class is dealt with.

**Determining Logical Order**

The purpose of determining a logical order between events is to determine whether two events could have been performed in an unpredictable order. If two events are unordered and both events access shared data and at least one of the events modifies this shared data, then a data race occurs between these two events on the shared data.

To avoid data races, a programmer can force fragments of code running on different threads to execute in a certain order by adding extra synchronisation between these fragments. The fragments of code of a thread that are separated from each other by a synchronisation operation are commonly called events. The $i^{th}$ event of thread $T_t$ will be denoted in the present description by $e_{t,i}$. A data race occurs when there is no set of synchronisations that force the events modifying a shared variable to occur in a fixed order.

Vector *Clocks*

The present invention models the ordering of events by using a construct called a vector clock as defined by R. Schwarz and F. Mattern in "Detecting causal relationships in distributed computations: in search of the holy grale" (Distributed Computing, p.149-174, 1994) and by C.J. Fidge in "Partial orders for parallel debugging" (In Proceedings of the ACM SIGPLAN and SIGOPS Workshop on parallel and distributed debugging, p.183-194, May 1988).

Vector clocks are used in distributed systems to determine whether pairs of events are causally related. Timestamps are generated for each event in the system, and a causal relationship is determined by comparing these timestamps. Each process assigns a timestamp to each event. Vector clocks are tuples of integers with a dimension equal to the maximum degree of parallelism (number of threads) in the application. In a system made up of n processes (n threads), each process keeps a vector clock with n slots. Each integer value of a vector clock corresponds to a thread in the application and is called a scalar clock value of that thread. The first event, $e_{t,0}$, of every thread $T_t$ is assigned the vector clock

$$VC(e_{t,0})_j = \begin{cases} 0 & , j \neq t \\ 1 & , j = t \end{cases}$$

The value of the vector clock of a next event in a thread is calculated using the vector clocks of its preceding events. If event $e_{t,i}$ on thread $T_t$ is ordered after events $E = \{e_{t,0}, ..., e_{t,n}\}$, its vector clock becomes

$$VC(e_{t,i})_j = \begin{cases} (\max E)_j & , j \neq t \\ (\max E)_j + 1 & , j = t \end{cases}$$

where $(\max E)_j = \max\{e{:}E.VC(e)_j\}$ denotes the component-wise maximum of the vector clocks of the events in $E$.

The most important property of vector clocks, for the purposes of the present invention, is that they can be used to verify whether two events are ordered by a path of synchronisations. Two events, *a* and *b*, are ordered if and only if

$$a \rightarrow b \equiv (\forall i.VC(a)_i \leq VC(b)_i) \wedge (\exists i.VC(a)_i < VC(b)_i)$$

If the thread identification numbers, *i* and *j*, of two different threads, $T_i$ and $T_j$, on which the events, *a* and *b*, occurred, are known, then an important optimisation is possible.

$$a \rightarrow b \equiv VC(a)_i \leq VC(b)_j$$

Two events are parallel, i.e. not ordered, if and only if

$$a||b \equiv \neg(a \rightarrow b) \wedge \neg(b \rightarrow a)$$

If the set of all locations written to during event *a* is defined as W(a) and the set of all locations read during event *a* is defined as R(a) then two events, *a* and *b*, will be involved in a data race if and only if

$$(a||b) \wedge ((W(a) \cap R(b) \neq \phi) \vee (R(a) \cap W(b) \neq \phi) \vee (W(a) \cap W(b) \neq \phi))$$

*Accordion Clocks*

Vector clocks have one major drawback: for every new thread, a new position in the vector clock is needed. Hence, the dimensionality of a vector clock is the maximum number of threads created by a program.

For FTP-servers, browsers, etc. which, for every new job that must be performed, dynamically create a new thread, this means that the vector clocks grow excessively large. It is to be noted however that, for this type of applications, the number of threads that are concurrently active, is usually much lower than the total number of threads created during the lifetime of the application. To exploit this, 'accordion clocks', are constructed in accordance with an embodiment of the invention that grow and shrink as the need requires.

In Fig. 6, the data structure for accordion clocks is represented. Accordion clock 601 comprises a lock 602 that can be taken by a thread if exclusive access to the accordion clock 601 is required. Further, the address 603 of a local clock 604 is present. This is the address of the data structure that actually contains the accordion clock data. The local clock 604 comprises a lock field 605, a count field 606, an array of values 607, a next field 608 and a previous field 609.

A thread can lock the lock field 605 of the local clock 604 to obtain exclusive access to the local clock 604.

The values of the local clock 604 are maintained in an array of values 607. This array 607 has the same function as a general vector clock (defined above) but is generally of a smaller dimension. The local clock 604 can be shared among multiple accordion clocks 601 and implements copy-on-write semantics. The count field 606 indicates the number of different accordion clocks that use the local clock 604. As soon as an accordion clock 601 requests a modification of the values 607 of its local clock 604, a new copy must be made of the local clock 604 and assigned to the accordion clock 601 making the request. The values 607 can then be updated. The count field 606 of the new local clock 604 is assigned the value of 1 and the count field 606 of the old local clock is decremented by 1. When the count field 606 drops to 0, the local clock's space can be reclaimed by the system. The next field 608 and previous field 609 are used to link the local clock 604 in a doubly linked circular list 610.

An additional global data structure, translation table 611 (tt), is maintained. This is an array that dynamically grows as threads are created. The length of the translation table 611 is equal to the total number of threads seen up till the current point in the execution of the program. The translation table 611 is used to indicate the position, $tt_i$, in the array of values 607 of the scalar clock of a thread $T_i$.

Accordion clocks 601 are used as follows. When the program starts, only one thread is active. All accordion clocks 601, $ac_i$, are created with length one.

$$l(ac_i) = 1$$

The translation table 611 is also of length one

$$l(tt) = 1$$

with

$$tt_i = 0$$

indicating that the scalar clock of thread number 0, $T_0$, is at position 0 in the values arrays 607 of all the local clocks 604.

When a new thread is created, $T_{new}$, the translation table, tt, 611, is replaced by a copy, tt', with one extra position at the end.

$$l(tt') = l(tt) + 1$$

All local clocks 604 are enumerated through the linked list 610 and their value arrays 607, $va_i$, are replaced by a copy, $va_i'$, with one extra position at the end. At the extra position the value zero is stored:

$$\begin{cases} l(va'_i) = l(va_i) + 1 \\ va'_{i,j} = va_{i,j} \quad, 0 \leq j < l(va'_i) - 1 \\ va'_{i,l(va'_i)-1} = 0 \end{cases}$$

indicating that no synchronisation with the new thread, $T_{new}$, occurred yet. At the new position of the translation table 611, the new position of the extended value arrays 607 is stored:

$$tt'_{l(tt')-1} = l(va'_i)-1$$

indicating that this is the position where the scalar clocks of $T_{new}$ are stored in the values arrays 607.

When an existing thread, $T_{old}$, goes out of scope, which is explained later, the position of its scalar clock, $tt_{old}$, in the value arrays 607, $va_i$, of the local clocks 604 is removed. This is done by creating a copy, $va'_i$, which is one position shorter

$$\begin{cases} l(va'_i) = l(va_i) - 1 \\ va'_{i,j} = va_{i,j} \quad, j < tt_{old} \\ va'_{i,j} = va_{i,j+1} \quad, j > tt_{old} \end{cases}$$

$$(1)$$

Similarly, a new copy (tt') of the translation table 611 must be created that reflects the fact that the positions of the scalar clocks have shifted.

(2)

$$\begin{cases} l(tt') = l(tt) \\ tt'_i = tt_i \quad ,tt_i < tt_{old} \\ tt'_i = tt_i - 1 \quad ,tt_i > tt_{old} \end{cases}$$

How the size of the local clocks 604 and the size and content of the translation table 611 are adjusted in response to thread creation and destruction has been explained above. The use of the accordion clocks 601 as a drop-in-replacement for the behaviour of the vector clocks will now be described.

If a function $VA(e)$, is defined to be the value array assigned to an event, e, then the first event, $e_{t,0}$, of every thread $T_t$ is assigned an accordion clock 601 with a value array 607

$$VA(e_{t,0})_j = \begin{cases} 0 \quad ,j < l(VA(e_{t,0})) - 1 \\ 1 \quad ,j = l(VA(e_{t,0})) - 1 \end{cases}$$

(3)

The value array 607 of an accordion clock 601 of the next event in a thread is calculated using the accordion clocks 601 of its preceding events. If event $e_{t,i}$ on thread $T_t$ is ordered after events $E = \{e_0, ..., e_n\}$, the value array 607, $VA(e_{t,i})$ of the accordion clock 601 becomes

$$VA(e_{t,i})_j = \begin{cases} (\max E)_j \quad ,j \neq tt(t) \\ (\max E)_j + 1 \quad ,j = tt(t) \end{cases}$$

(4)

where

$$(\max E)_j = \max\{e: E.VA(e)_j\}$$

denotes the component-wise maximum of the value arrays 604 of the accordion clocks 601 in $E$.

Comparison of two accordion clocks 601 remains the same as when using vector clocks. Two events, $a$ and $b$, are ordered if and only if

$$a \rightarrow b \equiv (\forall i . VA(a)_i \leq VA(b)_i) \wedge (\exists i . VA(a)_i < VA(b)_i)$$

If the thread identification numbers, $i$ and $j$, of two different threads, $T_i$ and $T_j$, on which the events, $a$ and $b$, occurred are known, then an important optimisation is again possible:

$$a \rightarrow b \equiv VA(a)_{tt(i)} \leq VA(b)_{tt(j)}$$

A final point that must be clarified is when a position, $i$, from the value array 607 can be removed using the rules (1) and (2). This position, $i$, is the position of the scalar clock of the thread, $T_j$, with j the thread number of the thread being removed. It can be removed if and only if two conditions are met. The first condition is that thread $T_j$ must have finished its execution. The second condition is that there are no accordion clocks 601 left which were generated as a consequence of an event on thread $T_j$ through rules (3) and (4).

EP 1 202 172 A1

*Order in Java ™ Programs*

To avoid data races, a programmer can force fragments of code running on different threads to execute in a certain order by adding extra synchronisation between these threads. Java contains several constructs that enforce synchronisation:

- the sequential execution of code,
- start and join which operate on objects of type Thread,
- locked objects,
- synchronised member functions,
- and wait and notify (All).

There are a few other operations on objects of type Thread, that influence the execution of other threads but which are not taken into consideration since they are either being removed from the Java APIs or cannot be used to synchronise two threads: destroy, interrupt, resume and stop.

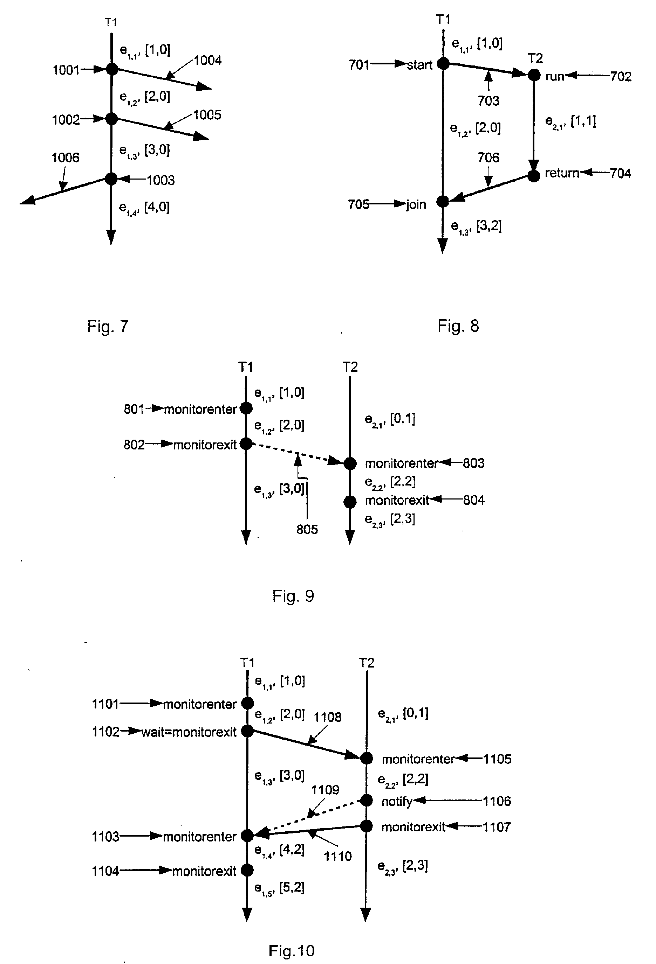

The most basic form of order in Java is the sequential execution order of events in one thread, $T_1$ (see Fig. 7). Events $e_{1,1}$, $e_{1,2}$, $e_{1,3}$, and $e_{1,4}$ are all events of thread $T_1$. They are separated by some synchronisation operation, 1001, 1002, 1003 from each other. This synchronisation operation has as a result that other events will happen in a specific order indicated by the arrows 1004, 1005, 1006. Since the events $e_{1,i}$ all were performed by the same thread, they will always be executed in the same sequential order.

Another synchronisation can be seen in Fig. 8. The start member function 701 of objects of type Thread is called by thread $T_1$ to start the execution of a second thread, $T_2$. When start is invoked on the Thread object of thread $T_2$, a new thread is created that starts executing the run method 702 of the Thread object $T_2$ it was created from. This operation creates an order of events. All events in thread $T_2$, $e_{2,i}$, are automatically ordered after the events of thread $T_1$ that preceded the start method call, $e_{1,1}$. This is indicated by the arrow 703 and is reflected by the values of the vector clocks.

Similarly, the join member function 705 of Thread objects allows one thread, $T_1$, to wait for the end of the execution 704 of a second thread, $T_2$. Again, this imposes an order on the events. All events, $e_{2,1}$, from thread $T_2$ are ordered before the events, $e_{1,3}$, of thread $T_1$ that follow the join. This is indicated by the arrow 706 and is reflected by the values of the vector clocks.

A lock 306 is associated with every Object in Java as can be seen in Fig. 3. A thread, $T_1$, can try to take this lock using the bytecode monitorenter 801 as can be seen in Fig. 9. If it has obtained the lock 306, it can release it through the bytecode monitorexit 802. When the lock 306 is already held by thread $T_1$ and thread $T_2$ tries to obtain the lock through bytecode monitorenter 803, the thread $T_2$ will be put on a waiting list until the lock 306 is released. Then $T_2$ will be rescheduled for execution.

This construct does not impose an order on the code of the two threads $T_1$, $T_2$ involved, it just indicates that there is a critical section between the bytecodes monitorenter and monitorexit (pairs 801, 802 and 803, 804). It does suggest that the programmer is aware of a potential race and is using this construct as synchronisation. This is therefore considered a 'de facto' synchronisation, depicted in Fig. 9 by a dashed arrow 805. All events before $e_{1,3}$ also come before $e_{2,2}$. This is reflected in the values of the vector clocks of the events.

The synchronized keyword is applied to a subset of the member functions of a class, the 'monitor'. When a thread invokes one of these member functions on an object of the synchronised class, Java™ ensures that none of the other member functions in the monitor is being executed. This is implemented through the object locking mechanism mentioned above. When a synchronised member function is executed, the lock of the object containing the member function is taken. When the member function finishes, the lock is released.

A final set of synchronisation primitives, as represented in Fig. 10, is wait and notify (All) which are member functions of every Object. When a thread, $T_1$, invokes wait 1102 on an object, the execution of the thread, $T_1$, is halted until another thread, $T_2$, executes notify (All) 1106 on that very same object. At that time the first thread, $T_1$, can continue its execution. This imposes the order seen in Fig. 10 depicted by the dotted arrow 1109. However, a thread is only allowed to invoke wait or notify on an object if that thread is owner of the lock of that object. The wait/notify construct is used to temporarily leave a monitor. So in reality it suffices to observe the orderings 1108 and 1110 between the monitorenter 1101, 1103, 1105 and monitorexit 1102, 1104, 1107 depicted by the full arrows 1108, 1110.

*Data Structures for Determining Logical Order*

So far, it has been indicated which program constructs in Java™ are considered as introducing an order. Now, it is shown how this ordering can be generated during the execution of multi-threaded Java™ programs.

Every thread $T_i$ consists of a sequence of events $e_{i,j}$ separated by synchronisation operations. When a thread

$T_i$ is started, through a call to the member function start of an object, o, of type Thread (or one of its derived types), then the instrumentation 404 of this object o is expanded by adding a thread information structure through the thread information structure address 406, as represented in Fig. 4.

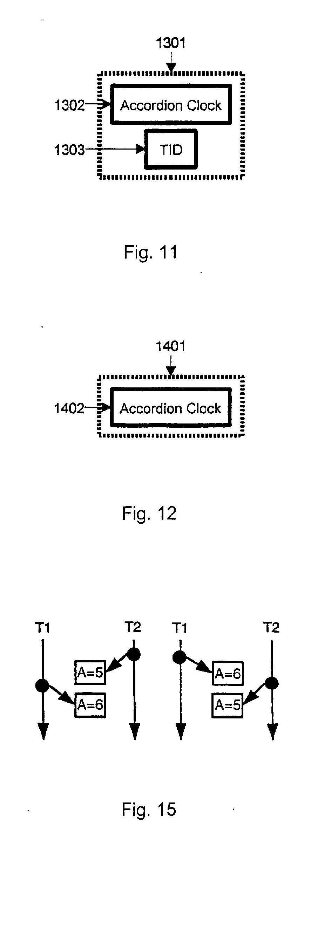

This thread information structure 410 is illustrated in Fig. 11. The thread information structure 1301 comprises two fields: an accordion clock 1302 and a thread identification number 1303.

The accordion clock 1302 is used to indicate the current accordion clock for the currently executing event, $e_{i,j}$, on the thread $T_i$. It is initialised as described by formula (3). Every time one of the synchronisation operations described hereinabove occur, the accordion clock 1302 is updated according to rule (4). This update is now described in more detail for every synchronisation operation.

A thread start (Fig. 8) involves two threads, for example $T_1$ and $T_2$. The thread $T_1$ was initially executing event $e_{1,1}$ and after the start operation 701 the thread is executing a new event $e_{1,2}$. The accordion clock 1302 of the newly executing event, $e_{1,2}$, is calculated by using rule (4) with $E=\{e_{1,1}\}$. Through the start method call 701, a second thread, $T_2$, is created. This second thread $T_2$ is initially given a accordion clock 1302 according to rule (3). However, since event $e_{2,1}$ is ordered after event $e_{1,1}$, this accordion clock 1302 must be updated immediately according to rule (4) with $E = \{e_{1,1}\}$

A thread join (Fig. 8) involves two threads for example $T_1$ and $T_2$. Thread $T_2$ terminates after its return statement 704 so no new event is started and the accordion clock 1302 of thread $T_2$ does not need to be updated. Thread $T_1$ on the other hand was executing event $e_{1,2}$ and through the join 705 a new event, $e_{1,3}$, is started. The accordion clock 1302 is updated according to rule (4) with $E = \{e_{1,2}, e_{2,1}\}$. The accordion clock for event $e_{2,1}$ is obtained through the accordion clock field 1302 of the thread $T_2$.

To correctly handle the case of synchronisation through object 401 locking and method synchronisation, a data structure called the lock information structure 409 is used. The lock information structure 409 is described schematically in Fig. 12. The lock information structure 1401 contains but one field: an accordion clock 1402. The accordion clock 1402 contains the accordion clock of the last event that was executed by the last thread that performed a monitorexit on the object to which the lock information structure 409 is associated through the lock information structure address 405.

Initially, when an object 401 is created, its lock information structure address 405 is not assigned a lock information structure 409. When an object's lock 306 is taken, for example as in Fig. 9, there are two separate cases: it is the first time the object is being locked or it isn't.

When an object 401 is locked for the first time 801 by a thread $T_1$, be it through a monitorenter operation or a call to a synchronised member function of this object, a lock information structure 409, 1401 is assigned to the lock information structure address 405. Its accordion clock 1402 is initialised to the accordion clock value 1302 of the thread $T_1$ performing the lock. The locking of the object is a synchronisation operation that ends event $e_{1,1}$ and starts $e_{1,2}$ on thread $T_1$. The accordion clock 1302 of the thread $T_1$ is updated according to rule (4) with $E=\{e_{1,1}\}$

Eventually, the lock on this 401 object will be released 802 by thread $T_1$. The accordion clock 1402 is assigned the current value of the accordion clock 1302 of the thread $T_1$. This synchronisation operation 802 ends the event $e_{1,2}$ and starts event $e_{1,3}$. The accordion clock 1302 of the thread $T_1$ must therefore be updated according to rule (4) with $E = \{e_{1,2}\}$.

When an object 401 is subsequently locked again 803 by for example thread $T_2$, the accordion clock 1302 of the thread $T_2$ is updated according to rule (4) with $E = \{e_{1,2}, e_{2,1}\}$. The value of the accordion clock of $e_{2,1}$ is the current accordion clock 1302 of thread $T_2$ and the value of the accordion clock of $e_{1,2}$ can be found in the field 1402 of the lock info structure 409.

The thread identification number field 1303 is assigned a sequence number. For the first thread, it is assigned 0, the next thread is assigned 1, and so on.

## Classifying Local and Global Objects

In order to detect inconsistent concurrency state transitions such as data races, it must be verified that none of the read and write operations to the same variable of an object happen in a non-deterministic order. One approach to doing this is to observe every bytecode in the Java™ program that reads or modifies data on the heap. This is very time consuming.

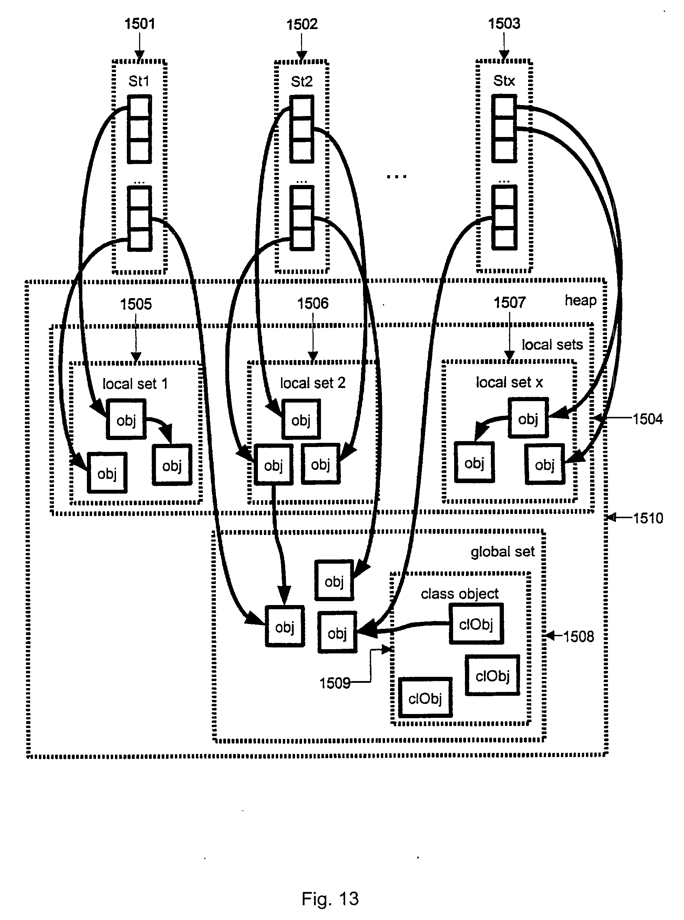

According to an embodiment of the present invention, sets 1504 of local objects and a set 1508 of global objects on the heap 1510 are constructed, as can be seen in Fig. 13. The local sets 1504 contain objects that can only be reached by one thread. The global set 1508 contains objects that may be reached by more than one thread. Only read and write operations to objects in the global set need to be observed extensively to determine the occurrence of data races in accordance with an embodiment of the present invention.

At program start-up, the global set 1508 is empty. An object is made member of the global set by storing the value -1 in the *TID* field 407 of the object instrumentation. There are three ways an object can become a member of the global set.

The first way occurs when a new class is initialised, a Class object is created and stored on the heap 1510. This object is immediately stored in the global set 1508 and remains there until it is destroyed. Class object represents a class when it is loaded by the Java™ interpreter. A Class is reachable by every thread since every thread is able to create an object of this type. This means that a Class object is always immediately made member of the global set 1510 (all Class objects are stored in the class set 1509). Inside a class, there are static variables that can be read and written to. These are, by definition of the Java™ language, immediately global to all threads.

The second way occurs when a reference, *r*, to a local object is manipulated by the bytecodes aastore, putfield or putstatic. Initially an object is created locally. The only references to it exist on its creating thread's stack. One way to change the status of an object from local to global is by storing its reference into a second object. If this second object is reachable by another thread, so does the object become reachable by this other thread. At this point, the object could potentially be involved in a race. If, on the other hand, the second object is solely reachable by the thread itself and not by another thread, the object remains local. There is only a small number of bytecodes that can manipulate the reference of an object. The bytecode aastore stores a reference, *r*, into a field of an array. The bytecode putfield stores a reference, *r*, or a value, *v*, into a non-static member variable of an object, *o*. The bytecode putstatic stores a reference, *r*, or a value, *v*, into a static member variable of an object, *o*.

If a putfield or putstatic bytecode is used, it is verified whether they are storing a reference *r* into the member variables of object *o*. If a reference *r* is not dealt with but with another value *v*, the global set 1508 and the local sets 1504 are not modified. If a reference *r* is dealt with then it is checked whether *o* is global i.e. its *TID* field 407 has the value -1. If *o* is global then the object to which reference *r* is pointing, *s*, is also made global by storing the value -1 in its *TID* field 407. Next, all the descendants of the object *s* are determined. The descendants are all objects that are reachable from object *s* through the references 304 contained in *s*. The descendants are also made global by storing the value -1 in their *TID* field 407 (when an object becomes global, all the objects reachable from this new global object also become global).

The third way is when an object, *o*, is of type Thread and this object is used to start a thread. In Java™, threads are started by creating an object containing a run method. When this object's start method is called, a new thread is created and starts executing the code in the run method. At thread start, the object *o* is reachable by both the new thread and the thread creating the new thread. Therefore, the Thread object *o* and all its descendants are made global by storing the value -1 in their *TID* field 407.

To improve the accuracy of the classification into a global set 1504 and local sets 1508, a 'refiner' can be invoked. The refiner's job is to make a more accurate estimate of the sets 1504 of local objects and set 1508 of global objects on the heap 1510 by removing objects from the global set 1508 that are only reachable by one thread. The algorithm described is based on a "mark and sweep algorithm" or a "mark and scan algorithm".

Before the refiner is invoked, all the other threads $T_i$ in the interpreter are stopped. For every thread $T_i$, a set $S_i$ of all the objects that are reachable from that thread is created. Every set $S_i$ can be represented by an array of bits, $B_i$. If a reference, *r*, is member of the set $S_i$, the bit $B_{i,j}$ at the index, *j*, corresponding to the reference *r* is set to 1. Else it is set to 0. Initially every set is empty, $S_i = \emptyset$ so $\forall i. \forall j. B_{ij} = 0$.

For every thread, $T_i$, all references present on its stack 1501, $St_i$, are entered in the set $S_i$. Every class object 1509 is also entered into the set $S_i$. Then all children of objects pointed to by references present in $S_i$ are entered into $S_i$. This is repeated until no more references can be added.

These sets $S_i$ are combined into a set of objects reachable from multiple threads as follows:

$$S_{tot} = \cup_{i,j} (S_i \cap S_j)$$

$S_{tot}$ is used to refine the general mechanism according to the present invention after garbage collection. If an object is not present in $S_{tot}$, it is only reachable from one thread and therefore local. Thus, if a reference, *r*, occurs in only one set, $S_k$, and *r* currently points to a global object, *o*, then this object *o* is made local by storing the value *k* into its *TID* field 407. The large data structures that are necessary to enable data race detection are then removed and the object is marked as being reachable only by this one thread.

Once the refiner has finished its analysis, the stopped threads can be resumed. The refiner can be called at the same time as a garbage collector or at any other moment in time when the programmer estimates that a large number of global objects might become local.

According to a preferred embodiment of the present invention, each time the garbage collector performs its job, it is followed by the refiner according to the present invention. A garbage collector must somehow determine, whatever its underlying algorithm, whether an object is no longer reachable by any thread of the program. If this is the case, the object can be removed from the heap. Due to the similarity between the garbage collector and the refiner, the refiner is thus preferably, but not necessarily, implemented after the garbage collector.

**Detecting Data Races**

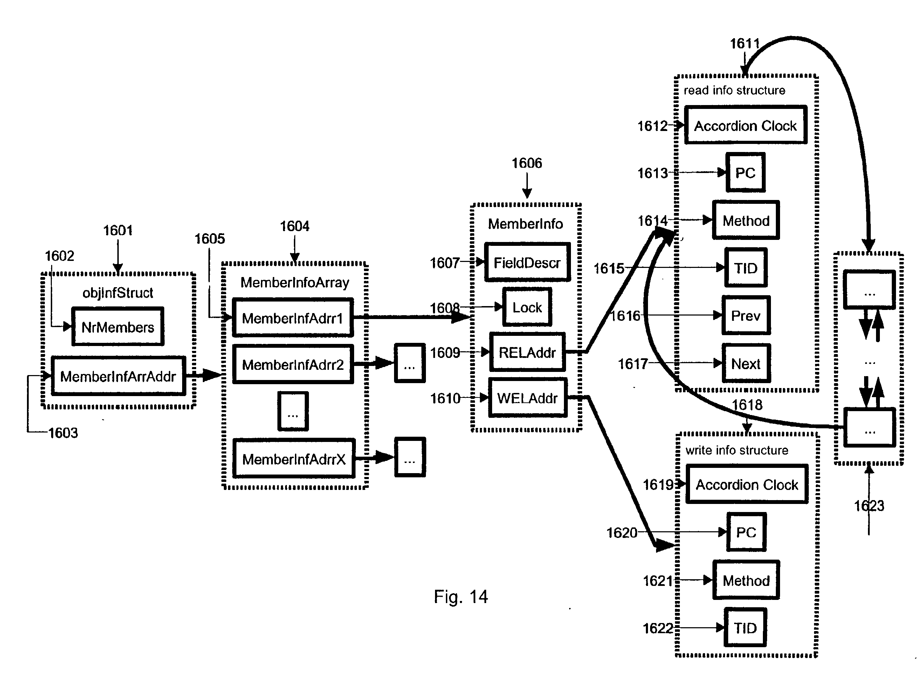

Once an object becomes a member of the global set 1508, it's instrumented further to allow full data race detection. The instrumentation can be seen in Fig. 14. An object information structure 411 is built and its address is stored in the object information address 408. The object structure contains 2 fields:

- the *NrMembers* field 1602 that contains the number of member variables that are present in this object and which accesses must be observed to detect data races,
- the *MemberInfArrAddr* field 1603 that contains the address of the 'member information array' 1604.

The member information array 1604 is an array of length *NrMembers* 1602 of addresses of 'member information structures' 1606. These member information structures 1606 are used to maintain an access history recording relevant read and write operations to the corresponding member variable.

The member information structures 1606 consist of:

- a field description 1607. This describes the member variable that is being observed. Information that might be contained is, e.g., the type, the name, ...of the member variable.
- a lock 1608. This lock can be used to obtain exclusive access to the member information structure 1606.
- a 'read list' address 1609. The address of a doubly linked list of 'read information structures' 1611. The read information structures 1611 are used to record information on relevant read operations. Initially, this list is empty.
- a 'write list' address 1610. The address of a 'write information structure' 1618. The write information structure 1618 records information about the last write operation performed on this membervariable. Initially, this list is empty.

The read information structures 1611 consist of six fields:

- an accordion clock 1612, which is a copy of the accordion clock 1302 of the thread that performed the read operation.
- a program counter 1613, which is the program counter at the time the read operation occurred.
- a method 1614, the method that performed the read operation.
- a thread identification number 1615, identifying the thread that performed the read operation.
- a next field 1616, used to link the read information structure in a doubly linked list 1623.
- a previous field 1617, used to link the read information structure in a doubly linked list 1623.

The read information structures 1611 describe the most recent read operation performed for each separate thread on the corresponding member variable.

The write information structure 1618 consists of four fields:

- an accordion clock 1619, which is a copy of the accordion clock 1302 of the thread that performed the write operation.
- a program counter 1620, which is the program counter at the time the write operation occurred.
- a method 1621, the method that performed the write operation.
- a thread identification number 1622, identifying the thread that performed the write operation. The write information structure 1618 describes the most recent write operation performed on the corresponding member variable.

Using the data structures described so far, data race detection is performed as follows. All bytecodes that read or write data from the heap need to be observed. These consist of:

- Read operations:

  - {abcdfils}aload which read data from a field of an array,
  - getfield which reads from a member variable of an object,
  - getstatic which reads from a member variable of an object,

- Write operations:

  - {abcdfils}astore which write data to a field of an array,
  - putfield which writes to a member variable of an object,
  - putstatic which writes to a static member variable of an object.

In addition to the actions that need to be taken to update the global set 1508 and the sets of local objects 1504, the following is performed when a thread $T_i$ executes one of the above bytecodes.

When an opcode is executed that reads a field, a member variable or a static variable of an object, *o*, then the *TID* 407 of o is read. If *o* is found to be local ($O_{TID} \neq$ -1), the interpreter can continue and no race is detected.

If *o* is found to be a global object, full race detection must be performed. The index, *j*, into the member information array 1604 corresponding to the member variable read is determined. A new read information structure 1611, $Read_{new}$, is built with the accordion clock 1302 of the executing thread, with the current program counter 1613, the currently executing method 1614 and the currently executing thread's thread identification 1615.

If there is already a previous read information structure 1611 present with the same thread identification number 1615, then this old read information structure 1611 is removed from the read list. The new read information structure 1611 is inserted into the read list.

If there is already a write operation stored in the write information structure 1618, $Write_{old}$, a race between $Read_{new}$ and $Write_{old}$ is reported if and only if:

$$(Read_{new}.TID \neq Write_{old}.TID) \wedge (Read_{new}.accordion \parallel Write_{old}.accordion)$$

When an opcode is executed that writes a field, a member variable or a static variable of an object, *o*, then the *TID* 407 of *o* is read. If *o* is found to be local ($O_{TID} \neq$ -1), the interpreter can continue and no race is detected.

If o is found to be a global object, full race detection must be performed. The index, *j*, into the member information array 1604 corresponding to the member variable written is determined. A new write information structure 1618, $Write_{new}$, is built with the accordion clock 1302 of the executing thread, with the current program counter 1613, the currently executing method 1614 and the currently executing thread's thread identification 1615.

If there is already a previous write operation, $Write_{old}$, stored in the write information structure 1618, a race between $Write_{new}$ and $Write_{old}$ is reported if and only if:

$$(Write_{new}.TID \neq Write_{old}. TID) \wedge (Write_{new}.accordion \parallel Write_{old}.accordion)$$

Furthermore, all previous read operations stored in the read information structures 1611, $Read_{i,old}$, are analysed with respect to the new write operation. A race between one of the read operations stored in $Read_{i,old}$ and the new write operation stored in $Write_{new}$ is reported if and only if:

$$(Write_{new}.TID \neq Read_{I,old}.TID) \wedge (Write_{new}.accordion \parallel Read_{i,old}.accordion)$$

Finally, the old write information structure 1618, $Write_{old}$, is replaced by the new write information structure, $Write_{new}$.

This analysis is carried out until the Java™ program terminates.

While the invention has been shown and described with reference to preferred embodiments, it will be understood by those skilled in the art that changes or modifications in detail may be made without departing from the scope and spirit of this invention.

**Implementation**

There are different possibilities for implementing the method of the present invention. These comprise different steps for implementing the method of the present invention.

*Java™ implementation*

The method of the present invention has been described in general hereinabove. Applied for an implementation in Java™, steps as described hereinafter are to be taken.

In a first implementation, the method may be implemented in an interpreter. As shown in Fig. 17b, an interpreter 1707 is a program which executes other programs. It accepts as input source code 1706, a program text in a certain language, and executes it directly on a machine 1708. The interpreter 1707 analyses each statement in the program each time it is executed and then performs the desired action.

Different steps are to be taken for implementing the method of the present invention in an interpreter.

A first step is to instrument all the synchronisation primitives of Java™ using vector clocks or accordion clocks, which are an advanced version of vector clocks that can dynamically grow and shrink as threads are created and destroyed.

A next step is to instrument every object with a minimal data structure that allows the method of the present invention to be used. When objects are created using new, newarray, anewarray or multianewarray, they are extended with an instrumentation data structure consisting of at least 8 bytes extra, e.g. 20 bytes extra. The structure consists of two parts. The first is the thread identification number (TID). In this field, the TID of the thread that created this object is stored or, when the object becomes global and is reachable by several threads, -1 is stored. The second part consists of link fields that will be used to link a much larger data structure for full data race detection only when the object becomes global.

An object can contain several fields that can be written or read. If a new global object is instrumented, each field must have its specific data structure that maintains information about the accesses to that field. This data structure contains: a description of the field being accessed containing its name, type information, the location in the code where the last read and write occurred. This consists of a class, a member function, a thread identification and a Java Virtual Machine (JVM™) program counter. And finally, a vector clock indicating when the last reads and write occurred.

Using this data structure, the instructions aastore, putfield and putstatic are instrumented.

If it is supposed that the bytecode aastore stores a reference, R into an array, referred to by reference A, then there are two possibilities:

- If the object pointed to by R is already global (R.TID == -1) then nothing happens, the object is already being watched for possible data races
- If on the other hand, the object is not yet global, the TID of the array referred to by A is checked. If it is global (A.TID == -1), then by storing R into A, the object referred to by R also becomes global. Otherwise, if A.TID != R.TID, the reference is being stored into an array that is reachable by another thread. The object referred to by R must again be made global.
- If the object referred to by R becomes global, all its children are recursively checked. Each child that is not yet global is made global. Attention must be paid to stack overflow when recursively marking a deep data structure as global.

A similar procedure is followed for putfield and for putstatic.

Finally, the actual race detection is carried out. For this, 20 bytecodes, for instance, are instrumented which read or write to an object. Each time such a bytecode is executed, it is checked whether it is a global object. If not, nothing has to be done; races are impossible. If a global object is being dealt with, the extra data structures can be accessed and it can be verified, using the vector clocks or accordion clocks, whether this new instruction represents a data race. If so, this is flagged to the user. The data structures containing the history of read and write operations on the objects are then updated with the new location of this instruction and the new vector clock indicating when the instruction occurred.

In a second implementation, the method may be implemented in a compiler. In its most general form, as shown in Fig. 17a, a compiler 1704 is a program that accepts as input a source code 1701, a program text in a certain language, and produces as output an executable code 1702, a program text in machine language, also called object code, while preserving the meaning of that text. Almost all compilers translate from one input language, the source language, to one output language, the target language, only. The source and target language are normally expected to differ greatly: the source language could be C and the target language is machine-specific binary executable code, to be executed by a machine 1703, such as a Pentium processor for example. There exist also compilers that compile from one language to another, for example from Java to C, or from bytecode to C.

In this second implementation, code according to the method of the present invention is added to the generated code to be executed for every instruction where a check is required. This means that, instead of a dynamic call to instrumentation routines, a static call to instrumentation routines is added to the generated code. For example:

- replace the allocating instructions (new, newarray, anewarray, multinewarray) to instrument objects, so that extra memory is allocated for data structures used while instrumenting the program,
- replace the implementation of the synchronisation operations (in Thread and Object) so that vector clocks or accordion clocks are updated to build causal relationships between events,
- replace the implementation of monitorenter and monitorexit so that each time an object is locked through these bytecode instructions the accordion clocks are updated,
- and replace the read and write instructions to observe whether objects become global and whether read and write operations are involved in a race.

In a third implementation, the method is implemented in hardware. There exist processors that execute Java bytecode directly (picoJava from Sun Microsystems for example). If an adaptation of such a processor is made, the following is done:

- If an object is created, instrumentation is added. Therefore, on a new, newarray, anewarray or multinewarray instruction, an interrupt is generated. The instructions are intercepted in a trap routine which performs the memory allocation so that memory is allocated for the created object and the extra instrumentation. For example, in this extra memory, two fields could be stored. One field, the thread identification field (TID), would indicate whether an object is global by containing the value -1 or would contain the value of the identification of the only thread that can reach the object. Initially, at the object's construction, this field would contain the identification of the thread that created the object. The second field, the link field (LINK), would serve as a link to a larger data structure that is only allocated when this object becomes global. Initially, at the object 's construction, this field would be empty.

- If bytecodes that can change references to objects are implemented, a trap is generated so that a jump to other bytecode is possible. This bytecode is then responsible for analysing the changes to the references. If by such a change objects might become reachable to more then one thread, these objects are marked, using the extra allocated space, as being global. Also, the link field is used to connect a larger data structure used for full data race detection. This data structure would maintain a list of read operations and the last write operation together with accordion clocks indicating 'when' these operations occurred.

- If the synchronisation operations in the Thread class (starting, joining, ...) are implemented in pure Java code, some code is added to calculate the vector/accordion clocks. The synchronisation operations in the Object class is similarly instrumented. If the monitorenter and monitorexit is implemented in hardware, this instruction is trapped to an instrumentation trap-handler where the accordion clocks are updated.

- The instructions that perform read/write operations are trapped and intercepted in a trap routine. First, the routine would check whether it is reading or writing to a local object. If so, no further race detection is necessary since no race is possible. If on the other hand it is detected that a read or a write occurred to a global object (TID==1) then the read or write operation is analysed using the history of read and write operations, added during creation of the object and further expanded when the object became global, in order to detect a data race.. If a race is detected, a trap could be taken that is dedicated to notifying the user of the fact that a race has occurred. The user can then write his own interrupt handler to respond appropriately to the occurrence

A fourth implementation is the following: in a virtual machine from Sun, there is a profiler interface called the "Java virtual Machine Profiler Interface" (JVMPI). It is used to attach a profiler (a shared library) to a virtual machine. This profiler can request to be notified of all sorts of events that might interest it. For example the entering of monitors, loading of classes, calling of memberfunctions, etc. Using JVMPI it is possible to request to be handed the classfile of a Class that will be loaded. At that point, the profiler can modify the code and hand it back to the virtual machine which will effectively load it and start 'executing its code. Race detection then goes as follows:

- When the class Object is loaded, it is adapted so that extra memberfields are added for the instrumentation, for example a thread identification field (TID) and a reference to a more elaborate data structure used when doing full data race detection. Furthermore, the code for the memberfunctions that are used for synchronisation (like wait) are instrumented so that it updates vector clocks.

- When the class Thread is loaded, it is adapted so that extra memberfields are added to be able to calculate the vector/accordion clocks. The memberfunctions used for synchronisation, like start, join, ... are modified so that they update the vector clocks.

- When other classes are loaded, the classfile is modified so that for each monitorenter and monitorexit bytecode, the vector/accordion clocks of the threads are updated. Furthermore, all the synchronised memberfunctions are looked for, and they are modified so that when they are called, the vector/accordion clocks of the threads are updated.

- In addition, all read/write operations in all class files are replaced so that, using the vector/accordion clocks and the extra data structures in Object, the accesses to objects are analysed for potential races.

*Implementation for another language/platform*

According to further embodiments of the present invention, programs written in languages which are not strictly object oriented may be analysed for inconsistent dynamic concurrency state transitions in the execution of multi-threaded programs, e.g. data races. Preferably the language shields the contents of an object from the outside world to a certain extent, i.e. the contents of an object are reachable by a limited set of references/handles/entry points, whatever they are called. In particular, the programs may use pointers or references. Using these it must be possible to determine which objects are reachable from another object or from a certain thread. Of course, the environment must support threads.

As the above embodiments have been described in detail, only the most important differences are described in the following.

The method then goes like this:

- The allocation routines of objects are located. These routines are adapted so as to add extra data structures to help with race detection, i.e. a thread identification (TID) to indicate whether this is a local or global object, and an extra data structure for the full data race detection.
- The data structures that describe the local state of a thread are located. The data structures for calculating the vector clocks are added to those.
- Next, all constructs that can be used to create an order between the execution of pieces of code are located. At these points, the code must be instrumented, be it inline or by a call to a routine, so that the vector clocks of the threads are updated to reflect the order that is created by the synchronisation operations.
- Next, all the read/write operations are located. Each must be replaced, be it inline or by a jump to a subroutine, by code that updates the global and local sets and which uses the data structures in each object to detect data races if these objects are in the global set.

It is possible that no heap is present. This implies (by definition) that no dynamic allocation of data structures is possible. This means that all data structures present in a program are already visible in its executable, i.e. they are statically allocated. These data structures must be located and expanded statically to add data structures for race detection. This is preferably done by the compiler. Furthermore, the extra data structures added to objects are probably also allocated statically. This is possible since they would have a fixed size since there would be a fixed number of threads (else dynamic data structures are needed). Therefore no gain in memory consumption is obtained by this technique, but a gain in execution speed since these data structures in the objects need not be updated if a local object is involved.

In this case of the language not using a heap, all objects are pre-allocated. So initially, these objects are to be marked global since it is not known which threads have access to them. It is therefore preferred to run as soon as possible the analysis routines that can refine the global set so as to mark most of these objects as local to a certain thread.

*Alternative Embodiment of a Refiner*

In one embodiment the classification into local and global objects goes as follows. This embodiment is called a "two spaces copying algorithm with tag provision" and is based on, and can be used with garbage collectors of the two space copying type. Each object is instrumented with a data structure which identifies whether it belongs to the global or to a local set. The data structures used are the same as the ones used for implementing the "mark and sweep algorithm", except for the one bit which shows whether an object is marked or not. This bit is not needed in the "two spaces copying algorithm", as there, instead of marking an object which belongs to a thread, it is copied to a second memory (or a new region of memory).

- A tag comprising a thread identification field (TID) is added to every object when it is instantiated.
- All objects in the root set of a particular thread are copied to a new region of memory and the TID of this thread is entered in the mark field of the copy. Pointers to the object need to be updated since it is stored elsewhere now.
- Then all descendants (children, children's children, etc.) are copied to the new region, still marking them with the TID.
- The same procedure is then started for the next thread. If an object is found that has already been copied into the new region, then its TID is examined. If the object's TID is different from the TID of the current thread, then it was clearly copied in by the analysis of a previous thread and therefore it is reachable by more than one thread. It is thus a global object, so its TID is marked -1, as well as the TIDs of all its descendants.
- Once analysing all the threads is finished, a copy consisting of only live objects is obtained, and each object has been marked with a TID that is either a number of a thread, indicating that it is local, or TID = -1, indicating that the object is global.

According to still a further embodiment, which is a modification of the previous embodiment, when a global object is encountered, it is copied to a third region instead of marking its TID -1. This is called a "three spaces copying algorithm".

Various combinations of garbage collectors and refiners are included within the scope of the present invention, each combination representing a separate embodiment of the present invention. For example, a copying garbage collector, e.g. two-space copying, and a mark and sweep global/local analysis; a mark and sweep garbage collector and a copying global/local analysis; a copying garbage collector and a copying global/local analysis; or a mark and sweep garbage collector and a mark and sweep global/local analysis may be combined.

**Improved garbage collector**

The method of the present invention can also be combined with or included as an integral part of a known garbage collector in order to obtain an improved garbage collector. Garbage collection is then split up in two portions: a local garbage collection carried out only on a local set, and a full garbage collection on all local and global sets. It is used as follows:

- The local sets and a global set as explained above, are constructed and maintained. Therefore, each object is instrumented as explained above, with a.o. a thread identification tag containing the thread identification of the thread to which the object belongs if it is a member of a local set, or a value that can never be assigned to a running thread, e.g. -1, if the object is a member of the global set.
- If an executing thread needs to allocate extra memory, but the memory is exhausted (or some threshold is passed) then a local garbage collector is first started. This local garbage collector marks all objects that are reachable from this one thread. Then it looks among all objects local to this one thread. If among these local objects there are objects that were not marked by the garbage collector, then these objects can be freed since these are objects that were only referenced by this one thread and at this point are no longer referenced at all. These objects cannot be referenced by any other thread and can therefore be removed without the help of another thread if they are not referenced anymore.
- If the thread is unable to reclaim enough memory on its own, then a full garbage collection is started.

The advantage of this approach is that, usually, a thread is able to clean up a large amount of data and allocate new memory without the intervention of other threads. A full garbage collection is then not required. This is a good thing, because a full garbage collection is a very disruptive process. To do a fast, full garbage collection, usually all the threads are stopped since it is very hard to clean up data that is still being manipulated by other threads.

**Claims**

1. A computer implemented method for classifying objects into a set of global objects, containing objects that can be reached by more than one thread, and a set of local objects, containing objects that can only be reached by one thread, when executing multi-threaded programs, whereby the classifying is done dynamically by observing modifications to references to objects by operations performed in the computer system.

2. The method of claim 1, wherein each object is provided with an instrumentation data structure to enable observation of modifications to references to objects.

3. The method of claim 2, wherein the instrumentation data structure comprises at least a thread identification tag for identifying whether an object can be reached by only one thread or by more than one thread.

4. The method of any previous claim further comprising the step of:

   recording in a memory concurrency state transition information of global objects.

5. The method according to any of claims 1 to 4, further comprising a step of selectably performing garbage collection only on the set of local objects.

6. A computer implemented method for detecting inconsistent dynamic concurrency state transitions in the execution of multi-threaded programs amenable to object reachability analysis, the method comprising the steps of:

   executing multiple threads on a computer;
   at least periodically during execution of the threads classifying instantiated objects into a set of global objects (503; 1508), containing objects that can be reached by more than one thread, and sets of local objects (504; 1505, 1506, 1507), containing objects that can only be reached by one thread, and
   recording in a memory concurrency state transition information of global objects.

7. The method according to claim 6, further comprising the step of determining occurrence of data races between two or more threads.

8. The method according to claim 6 or 7, wherein the set of global objects (503; 1508) is periodically analysed so as to remove objects from the global set which are only reachable by one thread.

9. Method according to claim 8, wherein the removal of objects of the global set which are only reachable by one thread takes place after a garbage collection step.

10. Method according to any of claims 6 to 9, wherein each object created during execution of the program is provided with an instrumentation data structure (404) to enable race detection.

11. Method according to claim 10, wherein the instrumentation data structure (404) comprises

   - a first address field (405) for containing the address of a first data structure (409; 1401) when the object is locked for the first time,
   - a second address field (406) for containing the address of a second data structure (410; 1301) if the object is of type thread or a subtype thereof,
   - a thread identification field (407) for recording whether the object belongs to the global set or to a local set,
   - a third address field (408) for containing the address of a third data structure (411; 1601) when the object belongs to the global set.

12. Method according to claim 11, wherein the first data structure (409; 1401) comprises a vector clock field for taking into account the fact that threads are created and destroyed dynamically.

13. Method according to claim 11 or 12, wherein the second data structure (410; 1301) comprises a vector clock field (1302) taking into account the fact that threads are created and destroyed dynamically, and indicating the current vector clock for the currently executing event on the thread, and a thread identification number (1303).

14. Method according to any of claims 11 to 13, wherein the third data structure (411; 1601) comprises a counter field (1602) for containing the number of member variables present in the object, and a fourth address field (1603) for containing the address of a fourth data structure (1604).

15. Method according to claim 14, wherein the fourth data structure (1604) is an array of a length given in the counter field that contains addresses of fifth data structures (1606).

16. Method according to claim 15, wherein the fifth data structures (1606) comprise

   - a field description field (1607) describing the member variable that is being observed,
   - a lock field (1608) for obtaining exclusive access to the fifth data structure (1606)
   - a read list address field (1609) for containing the address of a doubly linked list of read information structures (1611) used to record information on relevant read operations
   - a write list address field (1610) for containing the address of a write information data structure (1618) used to record information on relevant write operations.

17. Method according to claim 16, wherein the read information structure (1611) describes the most recent read operation performed for each separate thread on the corresponding member variable.

18. Method according to any of claims 16 or 17, wherein the write information data structure (1618) describes the most recent write operation performed on the corresponding member variable.

19. A computer implemented method for determining the order of events in the presence of a dynamically changing number of threads of a computer program executable on a computer, wherein a clock data structure (601) is maintained in memory from which clock data structure the occurrence of two events in parallel during execution of the threads can be determined, the dimension of the clock data structure (601) being determined dynamically dependent upon the number of threads created and destroyed during execution of the program.

20. Method according to claim 19, wherein the clock data structure (601) comprises a lock (602) to be taken by a thread if exclusive access to the clock is required, and the address (603) of a local clock data structure (604).

21. Method according to claim 20, wherein the local clock data structure (604) comprises

- a lock field (605) to be locked by a thread for obtaining exclusive access to the local clock data structure (604),
- a count field (606) indicating the number of different vector clocks that use the local clock data structure (604),
- an array of values (607) containing the values of he local clock data structure (604),
- a next field (608) and a previous field (609) to link the local clock data structure (604) in a doubly linked circular list (610).

22. Use of the method according to any of the claims 1 to 21, whereby the method is implemented in association with a virtual machine.

23. The use according to any of the claims 1 to 21, wherein the method is implemented in an interpreter.

24. Use of the method of any of claims 1 to 21, whereby the method is implemented in a compiler.

25. Use of the method according to any of claims 1 to 21, whereby the method is implemented in hardware.

26. Use of the method according to any of claims 1 to 21, whereby the method is implemented in a garbage collector.

27. A computer readable data carrier comprising a computer executable computer programming product for executing any of the methods of claims 1 to 21 on a computer.

Fig. 1

Fig. 2

Fig. 3

Fig. 4

501

Heap
502

Objects

global

local

503

504

Fig. 5

604

Local Clock

601

lock
605

Accordion Clock

count
606

602

lock

607

values

603

locClockAddr

608

next

previous
609

611

translation table

610

Fig. 6

Fig. 7

Fig. 8

Fig. 9

Fig.10

1301

Accordion Clock

1302

1303 → TID

Fig. 11

1401

Accordion Clock

1402

Fig. 12

T1    T2    T1    T2

A=5

A=6

A=6

A=5

Fig. 15

1501    1502    1503

St1    St2    Stx

...

1505    1506    1507    heap

local sets

local set 1    local set 2    local set x

obj    obj    obj    1504

obj    obj    obj    obj    obj    obj

1510

global set

obj

class object

obj    clObj    1508

1509    clObj

clObj

Fig. 13

Fig. 14

Fig.16   Prior art

Fig.17a

Fig.17b

**European Patent Office**

## EUROPEAN SEARCH REPORT

Application Number

EP 00 87 0257

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 892 946 A (LINARES MELISSA A ET AL) 6 April 1999 (1999-04-06) * column 1, line 44 - column 2, line 10 * --- | 1 | G06F9/46 |
| A | EP 0 289 072 A (PHILIPS NV) 2 November 1988 (1988-11-02) * column 1, line 1 - column 3, line 47 * --- | 1 | |
| A | EP 0 783 150 A (SUN MICROSYSTEMS INC) 9 July 1997 (1997-07-09) * page 2, line 16 - page 3, line 18 * ---- | 1 | |

TECHNICAL FIELDS
SEARCHED (Int.Cl.7)

G06F

The present search report has been drawn up for all claims

| Place of search | Date of completion of the search | Examiner |
|---|---|---|
| THE HAGUE | 26 September 2001 | Brandt, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 202 172 A1**

## ANNEX TO THE EUROPEAN SEARCH REPORT
## ON EUROPEAN PATENT APPLICATION NO.

EP 00 87 0257

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2001

| Patent document cited in search report | | Publication date | Patent family member(s) | | Publication date |
|---|---|---|---|---|---|
| US 5892946 | A | 06-04-1999 | AU | 6978196 A | 01-04-1997 |
| | | | EP | 0850447 A1 | 01-07-1998 |
| | | | JP | 2000500255 T | 11-01-2000 |
| | | | WO | 9710547 A1 | 20-03-1997 |
| EP 0289072 | A | 02-11-1988 | US | 4961137 A | 02-10-1990 |
| | | | EP | 0289072 A2 | 02-11-1988 |
| | | | JP | 63279360 A | 16-11-1988 |
| EP 0783150 | A | 09-07-1997 | US | 5701470 A | 23-12-1997 |
| | | | US | 5761670 A | 02-06-1998 |
| | | | AU | 707393 B2 | 08-07-1999 |
| | | | AU | 7402096 A | 12-06-1997 |
| | | | CA | 2191824 A1 | 09-06-1997 |
| | | | CN | 1160247 A | 24-09-1997 |
| | | | EP | 0783150 A2 | 09-07-1997 |
| | | | JP | 10049380 A | 20-02-1998 |
| | | | SG | 75107 A1 | 19-09-2000 |

For more details about this annex : see Official Journal of the European Patent Office, No. 12/82